# EUROPÄISCHE PATENTANMELDUNG

(11) **EP 4 660 499 A1**
(43) Veröffentlichungstag der Anmeldung: **10.12.2025**
(21) Anmeldenummer: 25179287.5
(22) Anmeldetag: 28.05.2025
(51) Int. Cl.: F16L 3/04, H02G 3/00, F16L 3/02, H02G 3/36, H02G 3/38

(54) **BEFESTIGUNGSELEMENT**

(30) Priorität: 03.06.2024 DE 202024102890 U
(71) Anmelder: Schäfer, Marcel, 45665 Recklinghausen (DE); Nosiadek, Martin, 46147 Oberhausen (DE)
(72) Erfinder: Schäfer, Marcel, 45665 Recklinghausen (DE); Nosiadek, Martin, 46147 Oberhausen (DE)
(74) Vertreter: Meinke, Jochen

(57) **Zusammenfassung**

Befestigungselement (1) zum Festlegen von Kabeln und/oder Leitungen (2) in Mauernuten (3) mit Nutinnenseiten (10) mit einem Aufnahmeelement (4) um ein verbessertes und vereinfachtes, kostengünstiges Befestigungselement zum Festlegen von Leitungen und/oder Rohren in Mauernuten zu schaffen, das einen sicheren Halt bietet, sehr schnell und einfach zu montieren ist, keinerlei Werkzeuge benötigt einfach mitzuführen und zudem sehr preiswert herzustellen ist, was durch das Aufnahmeelement (4) als nach oben offener U-Profil-Abschnitt (5) erreicht wird.

## Beschreibung

Die Erfindung betrifft ein Befestigungselement zum Festlegen von Rohren und/oder Leitungen in Mauernuten.

Bei der Unterputz-Verlegung von Leitungen, insbesondere von Wasser- oder Elektroleitungen, werden mit einer Mauernutfräse sogenannte Mauernuten in die Wand gefräst, um die Leitung in diese einzulegen und anschließend mit Gips oder Mörtel fixieren zu können.

Insbesondere bei größeren Strecken ist es notwendig, vor der Festlegung mit Gips oder Mörtel oder dem Einputzen eine Fixierung vorzunehmen.

Hierzu sind im Stand der Technik Nagelschellen mit einem Nagel und einer Kunststoffabdeckplatte am Nagelkopf bekannt. Diese müssen mit einem Handwerkzeug, insbesondere mit einem Hammer, in das Mauerwerk angeschlagen werden und bergen das Risiko einer Verletzung als auch einer Beschädigung der Leitungen und/oder Kabel. Zudem ist das Einschlagen der Nägel zeitaufwendig und bei hartem Mauerwerk oft auch schwierig bis unmöglich und erfordert ein zusätzliches Werkzeug, insbesondere einen Hammer.

Es sind auch Mauernutplatten aus Kunststoff bekannt, in die ein Nagel mit einer zum Mauerwerk passenden Länge eingesteckt wird. Auch diese Befestigung ist zeitaufwendig, um die Mauernutplatte herum muss zudem der Putz abgeklopft werden, damit der Nagelkopf beim endgültigen Verputzen nicht heraussteht.

Weiter sind im Stand der Technik insbesondere zur Verlegung von Rohrleitungen auch Schellen bekannt, die durch Nägel oder Schrauben in der Wand befestigt werden.

Weiter sind aus der DE 295 03 619 U1, DE 296 00 810 U1 und der DE 200 12 851 U1 Kabelklemmschellen zur Befestigung von Kabeln und Rohren in einem Schlitz im Mauerwerk mit einem die Leitung abdeckenden klemmend in den Schlitz eingreifenden Abschnitt und zwei von dem Hauptabschnitt senkrecht abgehenden Schenkeln offenbart, die durch eine Riffelung an den Außenseiten durch die Federkraft der seitlichen Schenkel die Kabelklemmschelle in dem Schlitz halten.

Darüber hinaus ist aus der DE 19855184 C1 ein Kabel- und Rohrklemmblock bekannt, der in eine Mauernut zum Festlegen einer Leitung getrieben wird.

Die DE 200 05 781 U1 offenbart eine Fixierklemme, die DE 298 03 142 U1 eine Fixiervorrichtung für Leitungen in Wandschlitzen.

Die DE 103 52 084 B4 schlägt ebenso wie die EP 1 498 651 A2 ein Befestigungselement zum Festlegen von Leitungen in Mauernuten mit einem federelastischen vorgekrümmten Hauptschenkelabschnitt mit zwei gegenüberliegenden Enden und jeweils quer von dem Hauptschenkelabschnitt hervorragenden Nasen im Bereich der Enden vor, das sich dadurch auszeichnet, dass der Hauptschenkelabschnitt und die steifen Nasen integral miteinander so geformt sind, dass die Nasen im gebogenen Zustand eine Leitungsaufnahmeschelle bilden, die im Einbauzustand des Befestigungselement gesehen voneinander wegweisen, und dass das Befestigungselement im Querschnitt ein Ω-Profil bildet.

Aufgabe der Erfindung ist es, ein verbessertes und vereinfachtes, kostengünstiges Befestigungselement zum Festlegen von Leitungen und/oder Rohren in Mauernuten zu schaffen, das einen sicheren Halt bietet, sehr schnell und einfach zu montieren ist, keinerlei Werkzeuge benötigt einfach mitzuführen und zudem sehr preiswert herzustellen ist.

Diese Aufgabe wird gemäß der Erfindung durch dem Hauptanspruch genannte Merkmalskombination erfüllt. Vorgesehen ist ein Befestigungselement zum Festlegen von Kabeln und/oder Leitungen in Mauernuten mit einem Aufnahmeelement, dadurch gekennzeichnet, dass das Aufnahmeelement als nach oben offener U-Profil-Abschnitt ausgebildet ist.

In vorteilhafter Ausgestaltung ist vorgesehen, dass das Aufnahmeelement an seinen beiden U-Schenkeln außenwandseitig reibungserhöhende Mittel aufweist.

Weiterhin ist vorgesehen, dass die reibungserhöhende Mittel als Rippen ausgebildet sind.

Ebenso ist vorgesehen, dass das Aufnahmeelement an seinen freien Enden spitzwinklig nach unten in Richtung des U-Bodens angeformte federnde Flügel aufweist.

In weiterer Ausgestaltung ist vorgesehen, dass die beiden Flügel außenwandseitig, d.h. zur Nutinnenseite weisende reibungserhöhende Mittel aufweist.

Schließlich ist auch vorgesehen, dass die reibungserhöhenden Mittel als Rippen ausgebildet sind.

Eine zusätzliche Ausgestaltung sieht auch eine Durchbrechung der U-förmigen Basis vor, die einen zusätzlichen Federeffekt erzeugt. In Betracht kommen dabei unterschiedliche Geometrien, etwa auch in X- oder Z-Form.

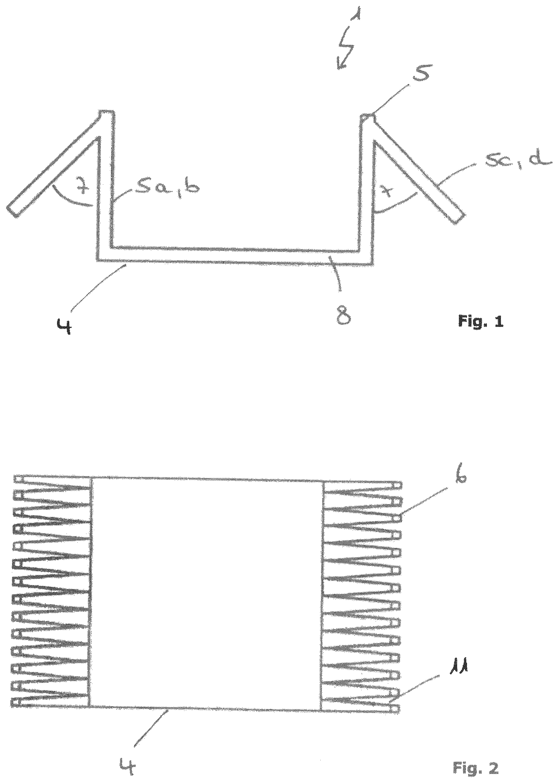

Die Erfindung ist nachstehend anhand der Zeichnung beispielhaft näher erläutert. Diese zeigt in
- Fig. 1: einen Querschnitt des Befestigungselements,
- Fig. 2: eine Aufsicht auf das Befestigungselements,

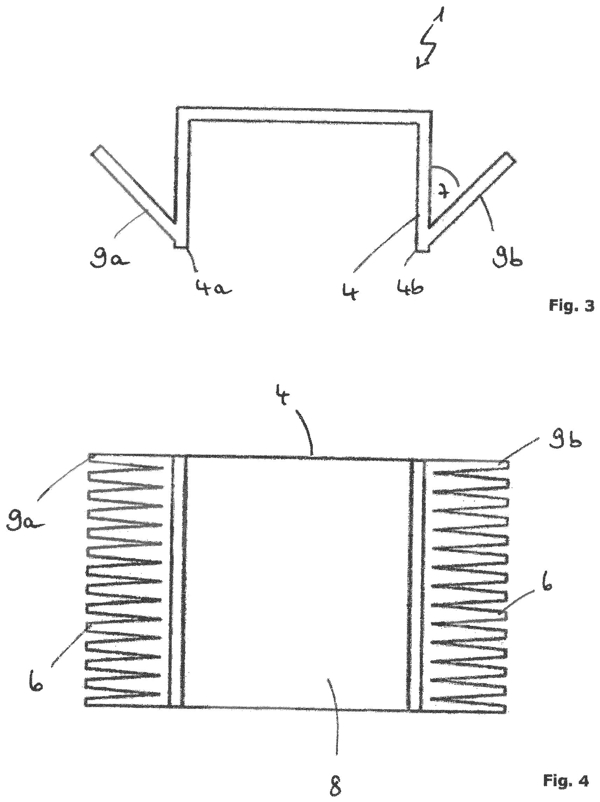

- Fig. 3: einen umgekehrten Querschnitt des Befestigungselements,
- Fig. 4: eine Untersicht des Befestigungselements,

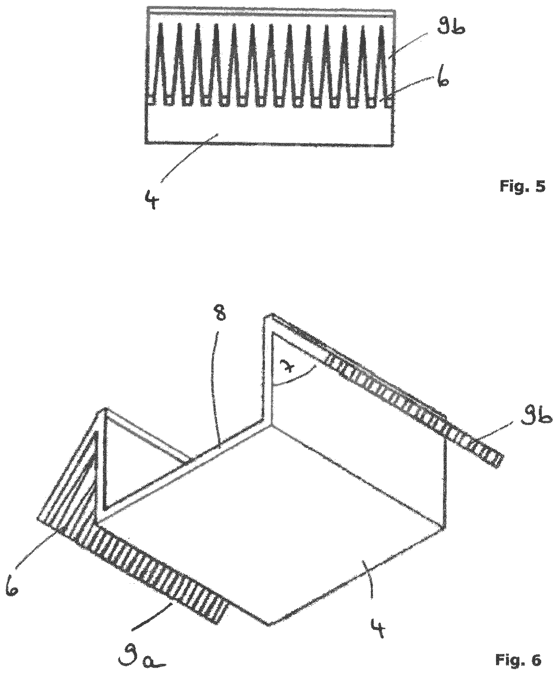

- Fig. 5: eine Seitenansicht des Befestigungselements,
- Fig. 6: eine perspektivische Ansicht des Befestigungselements,

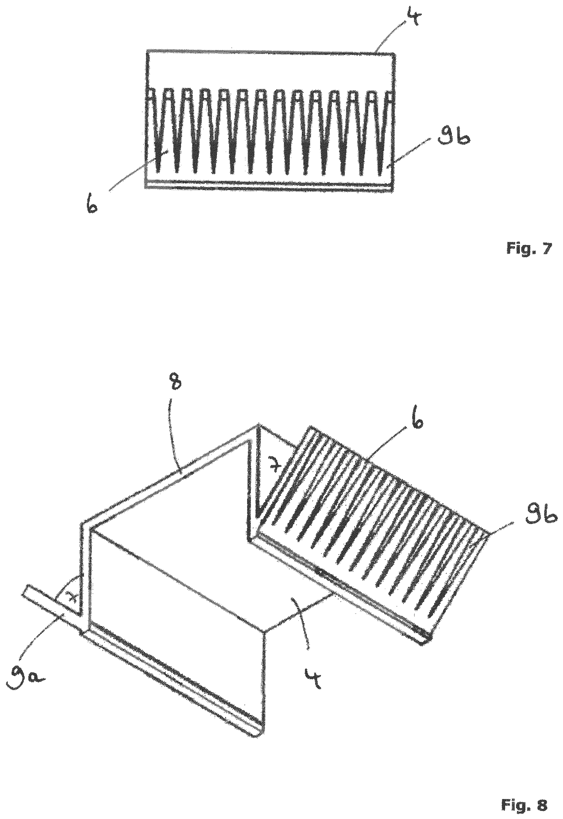

- Fig. 7: eine umgekehrte Unteransicht des Befestigungselements,
- Fig. 8: eine umgekehrte perspektivische Ansicht des Befestigungselements,

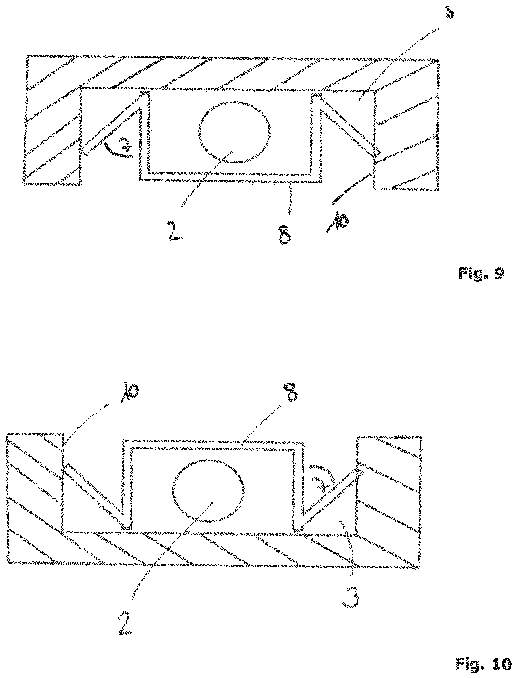

- Fig. 9: einen Querschnitt durch eine Mauernut mit eingeklemmten Befestigungselement und Rohr,
- Fig. 10: einen Querschnitt gemäß Fig. 9 auf dem Kopf,

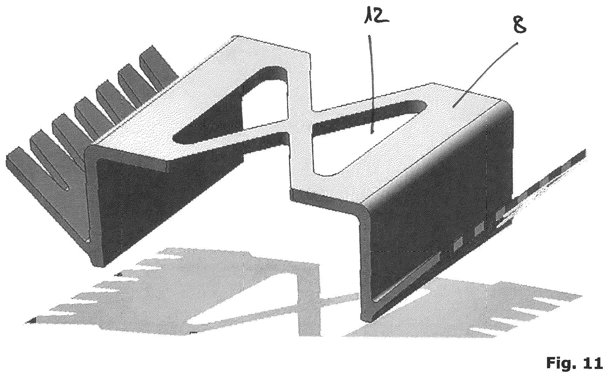

- Fig. 11: eine Untersicht auf ein Befestigungselement mit X-förmig durchbrochenem Boden.

Die Erfindung betrifft ein allgemein mit 1 bezeichnetes Befestigungselement zum Festlegen von Kabeln und/oder Leitungen 2 in Mauernuten 3 mit Nutinnenseiten 10. Das Befestigungselement 1 ist als Aufnahmeelement 4 mit einem nach oben offenen U-Profilabschnitt 5 ausgebildet und weist an seinen beiden U-Schenkeln 5a, 5b außenwandseitig reibungserhöhende Mittel 5c, 5d auf, die insbesondere als Rippen 6 ausgebildet sein können.

Das Aufnahmeelement 4 ist an seinen freien Enden 4a, 4b vorzugsweise im spitzen Winkel 7 nach unten in Richtung des U-Bodens 8 mit federnden Flügeln 9a, 9b versehen. Diese beiden Flügel 9a, 9b weisen die bereits erwähnten reibungserhöhenden Mittel 5c, 5d in Richtung der Nutinnenseiten 10 auf und können insbesondere auch als Rippen 11 ausgebildet sein.

Zur Festlegung der Kabel und/oder Leitungen wird das Befestigungselement 1 einfach mit der Hand mit der offenen Seite in die Mauernut eingedrückt und umschließt mit seinem freien Innenbereich das jeweilige Kabel 2 oder die jeweilige Leitung 2. Gleichzeitig verkrallt es sich mit seinen reibungserhöhenden Mitteln, insbesondere Rippen 11, die an den federnden Flügeln 9a, 9b im spitzen Winkel 7 angeformt sind, an den Nutinnenseiten 10 des Mauerschlitzes oder der Mauernut 3. Zum Eindrücken des Aufnahmeelementes 4 bedarf es keinerlei zusätzlichen Werkzeuges, vielmehr ist dieses einfach und schnell mit der bloßen Hand in den Schlitz bzw. die Nut 3 einzudrücken und hält von selbst, ohne dass es des Einschlagens irgendwelcher Nägel oder anderer Befestigungsmittel unter Zuhilfenahme irgendwelcher Werkzeuge bedürfte. Da das Befestigungselement aus Kunststoff oder Blech gefertigt werden kann, ist es einfach und kostengünstig und leicht zu transportieren und mit sich zu führen. Die Federwirkung kann dadurch verstärkt bzw. erleichtert werden, indem der U-förmige Boden 8 Durchbrechungen 12 aufweist.

Natürlich ist die Erfindung nicht auf die dargestellten Ausführungsbeispiele beschränkt. Weitere Ausgestaltungen sind möglich, ohne den Grundgedanken zu verlassen. Wesentlich ist es, dass sich das Befestigungselement 1 werkzeuglos in die Nut 3 eindrücken und das Kabel oder Rohr 2 in der Mauernut 3 festlegen lässt, bevor diese anschließend wieder zugeputzt wird. Das Element bleibt dabei in der Nut 3 und wird mit zugeputzt.

### Bezugszeichenliste:

- 1: Befestigungselement
- 2: Kabel/Leitungen
- 3: Mauernuten
- 4: Aufnahmeelement
- 4 a -b: freien Enden des Aufnahmeelements
- 5: nach oben offener U-Profilabschnitt
- 5 a - b: U-Schenkel
- 5 c - d: reibungserhöhende Mittel
- 6: Rippen
- 7: spitzer Winkel
- 8: U-Boden
- 9a,9b: federnde Flügel
- 10: Nutinnenseiten
- 11: Rippen
- 12: Durchbrechungen

## Patentansprüche

1. Befestigungselement (1) zum Festlegen von Kabeln und/oder Leitungen (2) in Mauernuten (3) mit Nutinnenseiten (10) mit einem Aufnahmeelement (4), **dadurch gekennzeichnet,**
**dass** das Aufnahmeelement (4) als nach oben offener U-Profil-Abschnitt (5) ausgebildet ist.

2. Befestigungselement nach Anspruch 1,
**dadurch gekennzeichnet,**
**dass** das Aufnahmeelement (4) an seinen beiden U-Schenkeln (5a, 5b) außenwandseitig reibungserhöhende Mittel (5c, 5d) aufweist.

3. Befestigungselement nach Anspruch 2,
**dadurch gekennzeichnet,**
**dass** die reibungserhöhende Mittel (5c, 5d) als Rippen (6) ausgebildet sind.

4. Befestigungselement nach Anspruch 3,
**dadurch gekennzeichnet,**
**dass** das Aufnahmeelement (4) an seinen freien Enden (4a, 4b) spitzwinklig (7) nach unten in Richtung des U-Bodens (8) angeformte federnde Flügel (9a, 9b) aufweist.

5. Befestigungselement nach Anspruch 4,
**dadurch gekennzeichnet,**
**dass** die beiden Flügel (9a, 9b) außenwandseitig, d.h. die Nutinnenseiten (10) weisende reibungserhöhende Mittel (5c, 5d) aufweist.

6. Befestigungselement nach einem oder mehreren der Ansprüche 1 bis 5, **dadurch gekennzeichnet,**
**dass** die reibungserhöhenden Mittel (5c, 5d) als Rippen (11) ausgebildet sind.

7. Befestigungselement nach einem oder mehreren der Ansprüche 1 bis 6, **dadurch gekennzeichnet,**
**dass** der U-förmige Boden (8) Durchbrechungen (12) aufweist.
